# EUROPÄISCHE PATENTSCHRIFT

(11) **EP 3 207 325 B1**
(45) Veröffentlichungstag und Bekanntmachung des Hinweises auf die Patenterteilung: **09.01.2019**
(21) Anmeldenummer: 15802017.2
(22) Anmeldetag: 24.11.2015
(51) Int. Cl.: F28D 15/02, F01K 1/04, F28D 15/06, F28D 20/00

(54) **VERFAHREN ZUM BETRIEB EINES THERMOCHEMISCHEN WÄRMESPEICHERS**
METHOD FOR OPERATING A THERMOCHEMICAL HEAT STORAGE DEVICE
PROCÉDÉ DE FONCTIONNEMENT D'UN ACCUMULATEUR DE CHALEUR THERMOCHIMIQUE

(30) Priorität: 12.12.2014 DE 102014225696
(43) Veröffentlichungstag der Anmeldung: 23.08.2017
(73) Patentinhaber: Siemens Aktiengesellschaft, 80333 München (DE)
(72) Erfinder: DANOV, Vladimir, 91056 Erlangen (DE); KAUTZ, Martin, 91056 Erlangen (DE)
(86) Internationale Anmeldenummer: PCT/EP2015/077432
(87) Internationale Veröffentlichungsnummer: WO 2016/091578

(56) Entgegenhaltungen:
- EP-A1- 2 444 594
- EP-A1- 2 708 719
- EP-A2- 2 256 406
- WO-A1-2014/033132

## Beschreibung

Die Erfindung betrifft ein Verfahren zum Betrieb, insbesondere zum Beladen und Entladen, eines thermochemischen Wärmespeichers. WO 2014/033132 A1 offenbart ein Verfahren mit den Merkmalen im Oberbegriff des Patentanspruchs 1.

Die Arbeit, die zu dieser Erfindung geführt hat, wurde von dem Siebten Rahmenprogramm der Europäischen Union [FP7/2007-2013] unter der Fördervereinbarung n° 282889 gefördert.

In solarthermischen Kraftwerken kann, beispielsweise mittels Parabolrinnenreceivern oder Turmreceivern, thermische Energie aus Sonneneinstrahlung gewonnen werden. Hierbei wird die thermische Energie auf ein Fluid übertragen, welches thermisch mit einem Dampfkreislauf gekoppelt ist. Mittels des Dampfkreislaufes kann folglich die thermische Energie, das heißt Hochtemperaturwärme, in elektrische Energie gewandelt werden.

Allerdings ist die Erzeugung der elektrischen Energie direkt mit der Sonneneinstrahlung gekoppelt. Um die Erzeugung der elektrischen Energie von der Sonneneinstrahlung zu entkoppeln, werden nach dem Stand der Technik thermische Wärmespeicher im Dampfkreislauf des solarthermischen Kraftwerkes integriert. Die thermischen Wärmespeicher können, je nach Art und Größe, kurzfristige (Wolken) und/oder mittelfristige (Nacht) Pausen der Sonneneinstrahlung kompensieren. Nach dem Stand der Technik sind beispielsweise Betonspeicher, Salzspeicher oder Hochdruckwasserspeicher als thermische Wärmespeicher vorgesehen.

Der vorliegenden Erfindung liegt die Aufgabe zugrunde, eine effiziente Speicherung von thermischer Energie mittels eines thermochemischen Wärmespeichers zu ermöglichen.

Die Aufgabe wird durch ein Verfahren mit den Merkmalen des unabhängigen Patentanspruches 1 gelöst. In den abhängigen Patentansprüchen sind vorteilhafte Ausgestaltungen und Weiterbildungen der Erfindung angegeben.

Bei dem erfindungsgemäßen Verfahren zum Betrieb eines thermochemischen Wärmespeichers wird in einem ersten Schritt durch ein Beladen des thermochemischen Wärmespeichers ein erster Wasserdampf erzeugt. In einem zweiten Schritt wird der erste Wasserdampf einem Wärmetauscher zugeführt. In einem dritten Schritt wird der erste Wasserdampf mittels des Wärmetauschers unter einer wenigstens teilweisen Abgabe seiner thermischen Energie wenigstens teilweise zu Wasser kondensiert. In einem anschließenden vierten Schritt wird das Wasser unter Druck gesetzt. Mit anderen Worten erfolgt im vierten Schritt eine Erhöhung des Druckes des Wassers. Weiterhin wird erfindungsgemäß in einem fünften Schritt das unter Druck gesetzte Wasser zum Wärmetauscher rückgeführt. In einem sechsten Schritt erfolgt unter einer wenigstens teilweisen Aufnahme der im dritten Schritt vorher abgegeben thermischen Energie wenigstens eine teilweise Verdampfung des unter Druck gesetzten Wassers zu zweiten Wasserdampf. In einem siebten Schritt wird der zweite Wasserdampf wenigstens teilweise in einem Dampfspeicher gespeichert.

Es erfolgt somit eine rekuperative Abkühlung des beim Beladen entstehenden Wasserdampfes (erster Wasserdampf). Der dadurch wenigstens teilweise verflüssigte erste Wasserdampf wird anschließend unter Druck gesetzt, das heißt der Druck wird erhöht, und weiterhin rekuperativ unter der wenigstens teilweisen Aufnahme der bei der rekuperativen Abkühlung abgegeben thermischen Energie wieder erhitzt oder überhitzt. Dadurch wird erfindungsgemäß Wasserdampf (zweiter Wasserdampf) auf einem gegenüber dem ersten Wasserdampf erhöhten Druckniveau erzeugt.

Erfindungsgemäß erfolgt eine Speicherung des ersten Wasserdampfes in Form des zweiten Wasserdampfes, welcher zweite Wasserdampf einen höheren Druck als der erste Wasserdampf aufweist. Dadurch wird vorteilhafterweise das Speichervolumen des Dampfspeichers gegenüber einer direkten Speicherung des ersten Wasserdampfes verringert. Je höher der Druck des zweiten Wasserdampfes, desto geringer das benötigte Speichervolumen des Dampfspeichers.

Erfindungsgemäß wird vor dem unter Druck setzen (Erhöhung des Druckes) des kondensierten ersten Wasserdampfes (Wasser) ein Teil der thermischen Energie des ersten Wasserdampfes mittels des Wärmetauschers zurückgewonnen und auf das unter Druck gesetzte Wasser zur Erzeugung des zweiten Wasserdampfes übertragen. Dadurch wird die energetische Effizienz des Verfahrens verbessert. Zudem wird vorteilhafterweise die für die Erhöhung des Druckes des Wassers benötigte Energie verringert und eine speichervolumensparende Speicherung des ersten Wasserdampfes, in Form des zweiten Wasserdampfes, ermöglicht.

Insbesondere eignet sich das erfindungsgemäße Verfahren zur Speicherung von Hochtemperaturwärme, beispielsweise eines solarthermischen Kraftwerkes.

In einer besonders vorteilhaften Weiterbildung der Erfindung wird der zweite Wasserdampf dem thermochemischen Wärmespeicher beim Entladen des thermochemischen Wärmespeichers wieder zugeführt.

Dadurch wird vorteilhafterweise der Wasserdampf, welcher zum Entladen des thermochemischen Wärmespeichers notwendig ist, durch den zweiten Wasserdampf bereitgestellt. Typischerweise muss der dem thermochemischen Wärmespeicher beim Entladen zugeführte Wasserdampf (zweiter Wasserdampf) einen größeren Druck als der beim Beladen erzeugte Wasserdampf (erster Wasserdampf) aufweisen. Vorteilhafterweise wird der größere Druck durch die Erhöhung des Druckes des Wassers und somit durch den zweiten Wasserdampf ermöglicht. Dadurch wird vorteilhafterweise die Speicherung des bei Beladen erzeugten Wasserdampfes (erster Wasserdampf) mit den Anforderungen an den Druck des Wasserdampfes (zweiter Wasserdampf) beim Entladen synergetisch kombiniert.

Gemäß einer vorteilhaften Weiterbildung der Erfindung wird ein Ruths-Dampfspeicher als Dampfspeicher verwendet.

Bei der vorteilhaften Verwendung eines Ruths-Dampfspeicher wird der zweite Wasserdampf im Zustand der Sättigung gespeichert. Dadurch wird vorteilhafterweise ein besonders kompakter Dampfspeicher bereitgestellt.

Bevorzugt wird das Wasser unter einen Druck von wenigstens 0,5 MPa (Megapascal) gesetzt.

Es erfolgt folglich bevorzugt eine Erhöhung des Druckes auf 0,5 MPa. Insbesondere ist eine Erhöhung des Druckes des Wassers auf wenigstens 0,5 MPa und höchstens 2,0 MPa, insbesondere höchstens 1,6 MPa, von Vorteil. Bei der Verwendung eines Ruths-Dampfspeichers ist eine Erhöhung des Druckes des Wassers auf wenigstens 1,5 MPa vorgesehen. Die genannten Druckbereiche sind deshalb von Vorteil, da dadurch bekannte Dampfspeicher verwendet werden können. Generell kann aber der Druck des Wassers an den verwendeten Dampfspeicher angepasst sein.

In einer vorteilhaften Ausgestaltung der Erfindung wird das unter Druck gesetzte Wasser vor seiner Rückführung zum Wärmetauscher erhitzt.

Dadurch wird vorteilhafterweise das Verdampfen des Wassers zu zweiten Wasserdampf unterstützt. Beispielsweise kann die Erhitzung des unter Druck gesetzten Wassers rekuperativ mittels eines weiteren Wärmetauschers erfolgen.

Gemäß einer bevorzugten Weiterbildung der Erfindung wird dem unter Druck gesetzten Wasser vor seiner Rückführung zum Wärmetauscher Frischwasser zugeführt.

Vorteilhafterweise wird dadurch das Speichern des zweiten Wasserdampfes unterstützt und verbessert. Insbesondere am Anfang des Beladens, das heißt bei einer ersten und/oder geringen Erzeugung des ersten Wasserdampfes, wird dadurch die rekuperative Abkühlung des ersten Wasserdampfes und die Erzeugung des zweiten Wasserdampfes sichergestellt. Hierbei kann eine vorangehende Erhitzung des zugeführten Frischwassers, beispielsweise rekuperativ, vorgesehen sein.

In einer vorteilhaften Ausgestaltung der Erfindung kann im Dampfspeicher gespeicherter zweiter Wasserdampf zur Erzeugung von Frischwasser verwendet werden.

Insbesondere kann das dadurch erzeugte Frischwasser in einem Wasserspeicher gespeichert und dem unter Druck gesetzten Wasser, beispielsweise zeitversetzt, zugeführt werden. Eine rekuperative Abkühlung des zweiten Wasserdampfes zur Erzeugung des Frischwassers kann vorgesehen sein.

Weitere Vorteile, Merkmale und Einzelheiten der Erfindung ergeben sich aus dem im Folgenden beschriebenen Ausführungsbeispielen sowie anhand der Zeichnungen. Dabei zeigen:
- Figur 1: ein schematisches Schaltbild für ein Beladen oder ein Entladen eines thermochemischen Wärmespeichers, wobei ein beim Beladen erzeugter Wasserdampf auf einem erhöhten Druckniveau in einem Dampfspeicher gespeichert wird; und
- Figur 2: ein weiteres schematisches Schaltbild für ein Beladen oder ein Entladen eines thermochemischen Wärmespeichers, wobei ein beim Beladen erzeugter Wasserdampf auf einem erhöhten Druckniveau in einem Ruths-Dampfspeicher gespeichert wird.

Gleichartige oder äquivalente Elemente können in den Figuren mit denselben Bezugszeichen versehen sein.

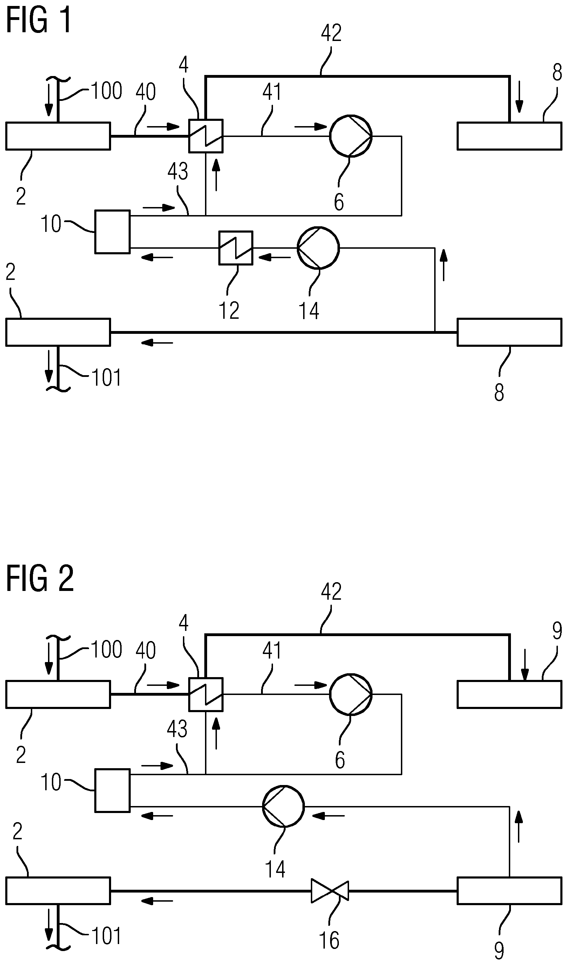

Figur 1 zeigt ein schematisches Schaltbild für ein Beladen 100 oder Entladen 101 eines thermochemischen Wärmespeichers 2 gemäß der vorliegenden Erfindung, wobei der thermochemische Wärmespeicher 2 auf CaO und Ca(OH)₂ basiert.

Beim Beladen 100 des thermochemischen Wärmespeichers 2 wird ein erster Wasserdampf 40 erzeugt. Hierbei weist der erste Wasserdampf 40 eine Temperatur von 420 °C und einen Druck von 0,01 MPa auf. Der erste Wasserdampf 40 wird anschließend einem Wärmetaucher 4 zur rekuperativen Abkühlung zugeführt. Dadurch kondensiert der erste Wasserdampf 40 wenigstens teilweise zu Wasser 41. Das Wasser 41 weist hierbei eine Temperatur von 46 °C und einen Druck von 0,01 MPa auf. Zur Erhöhung des Druckes des Wassers 41, gegenüber dem Druck des kondensierten Wasserdampfes 40, ist eine Pumpe 6 vorgesehen, die das Wasser 41 unter einen gegenüber 0,01 MPa erhöhten Druck von 0,5 MPa setzt. Die Temperatur des Wassers 41 bleibt bei der Erhöhung des Druckes mittels der Pumpe 6 annähernd konstant.

Das unter Druck gesetzte Wasser 41 wird wieder zum Wärmetauscher 4 rückgeführt. Im Wärmetauscher 4 wird die thermische Energie des ersten Wasserdampfes 40 auf das unter Druck gesetzte Wasser 41 übertagen. Dadurch erfolgt eine Erhitzung oder Überhitzung des unter Druck gesetzten Wassers 41, sodass eine Verdampfung des unter Druck gesetzten Wassers 41 zu zweitem Wasserdampf 42 erfolgt. Der zweite Wasserdampf 42 weist eine Temperatur von annähernd 420 °C und einen Druck von 0,5 MPa auf. Folglich ist der Druck des zweiten Wasserdampfes 42 gegenüber dem Druck des ersten Wasserdampfes 40 erhöht. Die Temperatur des zweiten Wasserdampfes 42 entspricht annähernd der Temperatur des ersten Wasserdampfes 40, wobei sich durch die Grädigkeit des Wärmetauschers 4 ein Temperaturunterschied ergeben kann.

Der zweite Wasserdampf 42 wird in einem Dampfspeicher 8 gespeichert. Aufgrund des gegenüber dem ersten Wasserdampf 41 erhöhten Druckes wird ein geringeres Speichervolumen zur Speicherung des zweiten Wasserdampfes 42 benötigt. Beispielsweise ist ein Speichervolumen des Dampfspeichers 8 von etwa 2·10⁶ m³ vorgesehen. Dadurch kann der zweite Wasserdampf 42 mit einem Massenstrom von etwa 100 kg/s über einen Zeitraum von 8 h gespeichert werden.

Beim Entladen 101 des thermochemischen Wärmespeichers 2 wird der mittels des Dampfspeichers 2 gespeicherte zweite Wasserdampf 42 dem thermochemischen Wärmespeicher wieder zugeführt. Allerdings erfolgt die Zuführung des zweiten Wasserdampfes 42 unter einem Druck, welcher Druck gegenüber dem Druck des ersten Wasserdampfes 40 erhöht ist. Beispielsweise wird dem thermochemischen Wärmespeicher 2 der zweite Wasserdampf 42 mit einer Temperatur von 420 °C und einem Druck von 0,5 MPa zugeführt. Der Massenstrom des zweiten Wasserdampfes 42 kann hierbei etwa 50 kg/s, beispielsweise über einen Zeitraum von 16 h, betragen.

Wenigstens ein Teil des gespeicherten zweiten Wasserdampfes 42 kann mittels einer weiteren Pumpe 14 über einen weiteren Wärmetauscher 12 einem Wasserspeicher 10 zugeführt werden. Hierbei erfolgt eine rekuperative Abkühlung des zweiten Wasserdampfes 42 innerhalb des weiteren Wärmetauschers 12. Dadurch erfolgt eine wenigstens teilweise Kondensation des zweiten Wasserdampfes 42. Der kondensierte zweite Wasserdampf 42 wird im Wasserspeicher 10 gespeichert und kann im flüssigen Aggregatzustand dem unter Druck gesetzten Wasser 41 wieder zugeführt werden.

In Figur 2 ist eine vorteilhafte Ausgestaltung des in Figur 1 gezeigten schematisierten Schaltbildes dargestellt. Hierbei zeigt Figur 2 im Wesentlichen dieselben Elemente wie bereits Figur 1.

In Figur 2 wird der zweite Wasserdampf 42 in einem Ruths-Dampfspeicher 9 gespeichert. Hierzu erfolgt eine gegenüber Figur 1 erhöhte Erhöhung des Druckes des Wassers 41, bei der das Wasser 41 unter einen Druck von 1,55 MPa gesetzt wird.

Hierbei weist das unter Druck gesetzte Wasser 41 eine Temperatur von 46 °C auf.

Weiterhin ist beim Entladen des thermochemischen Wärmespeichers 2 eine Leitung des gespeicherten zweiten Wasserdampfes 42 durch ein Expansionsventil 16 vorgesehen. Mit anderen Worten wird der Druck des gespeicherten zweiten Wasserdampfes 42 mittels des Expansionsventils 16, beispielsweise von 1,55 MPa auf 0,5 MPa, verringert. Nach dem Expansionsventil 16 weist der zweite Wasserdampf 42 eine Temperatur im Bereich von 150 °C und 200 °C auf.

Ferner ist aufgrund der Verwendung eines Ruths-Dampfspeichers 9 eine rekuperative Abkühlung des zweiten Wasserdampfes 42 zur Erzeugung von Frischwasser 43 nicht notwendig, sodass der weitere Wärmetauscher 12 aus Figur 1 entfallen kann.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

## Patentansprüche

1. Verfahren zum Betrieb eines thermochemischen Wärmespeichers (2), bei dem durch ein Beladen (100) des thermochemischen Wärmespeichers (2) ein erster Wasserdampf (40) erzeugt und einem Wärmetauscher (4) zugeführt wird, bei dem der erste Wasserdampf (40) mittels des Wärmetauschers (4) unter einer wenigstens teilweisen Abgabe seiner thermischen Energie wenigstens teilweise zu Wasser (41) kondensiert wird und bei dem das Wasser (41) anschließend unter Druck gesetzt wird, **dadurch gekennzeichnet, dass** das unter Druck gesetzte Wasser (41) zum Wärmetauscher (4) rückgeführt und unter einer wenigstens teilweisen Aufnahme der vorher abgegeben thermischen Energie wenigstens teilweise zu zweitem Wasserdampf (42) verdampft wird, welcher zweite Wasserdampf (42) wenigstens teilweise in einem Dampfspeicher (8, 9) gespeichert wird.

2. Verfahren gemäß Anspruch 1, bei dem der zweite Wasserdampf (42) dem thermochemischen Wärmespeicher (2) beim Entladen (101) des thermochemischen Wärmespeichers (2) zugeführt wird.

3. Verfahren gemäß Anspruch 1 oder 2, bei dem ein Ruths-Dampfspeicher (9) als Dampfspeicher (8, 9) verwendet wird.

4. Verfahren gemäß einem der vorangehenden Ansprüche, bei dem das Wasser (41) unter einen Druck von wenigstens 0,5 MPa gesetzt wird.

5. Verfahren gemäß einem der vorangehenden Ansprüche, bei dem das unter Druck gesetzte Wasser (41) vor seiner Rückführung zum Wärmetauscher (4) erhitzt wird.

6. Verfahren gemäß einem der vorangehenden Ansprüche, bei dem dem unter Druck gesetzten Wasser (41) vor seiner Rückführung zum Wärmetauscher (4) Frischwasser (43) zugeführt wird.

7. Verfahren gemäß Anspruch 6, bei dem wenigstens ein Teil des zweiten Wasserdampfes (42) zur Erzeugung von Frischwasser (43) verwendet wird.

## Claims

1. Method for operating a thermochemical heat storage unit (2), in which, as a result of a charging operation (100) of the thermochemical heat storage unit (2), a first steam (40) is produced and fed to a heat exchanger (4), in which the first steam (40), with an at least partial release of its thermal energy, is at least partially condensed into water (41) by means of the heat exchanger (4), and in which the water (41) is subsequently pressurized, **characterized in that** the pressurized water (41) is returned to the heat exchanger (4) and, with an at least partial absorption of the thermal energy previously released, at least partially evaporated into second steam (42), which second steam (42) is at least partially stored in a steam storage unit (8, 9).

2. Method according to Claim 1, in which the second steam (42) is fed to the thermochemical heat storage unit (2) during the discharging operation (101) of the thermochemical heat storage unit (2).

3. Method according to Claim 1 or 2, in which a Ruths steam storage unit (9) is used as the steam storage unit (8, 9).

4. Method according to one of the preceding claims, in which the water (41) is pressurized to at least 0.5 MPa.

5. Method according to one of the preceding claims, in which the pressurized water (41) is heated prior to its return to the heat exchanger (4).

6. Method according to one of the preceding claims, in which fresh water (43) is fed to the pressurized water (41) prior to the return of the latter to the heat exchanger (4).

7. Method according to Claim 6, in which at least part of the second steam (42) is used for producing fresh water (43).

## Revendications

1. Procédé pour faire fonctionner un accumulateur (2) de chaleur thermochimique, dans lequel, par une charge (100) de l'accumulateur (2) de chaleur thermochimique, on produit une première vapeur d'eau (40) et on l'envoie à un échangeur de chaleur (4), dans lequel on condense, au moins en partie, en eau (41) la première vapeur d'eau (40), au moyen de l'échangeur de chaleur (4) en cédant, au moins en partie, son énergie thermique et dans lequel on met ensuite l'eau (41) sous pression,
**caractérisé en ce que** l'on retourne l'eau (41) mise sous pression à l'échangeur de chaleur (4) et, en absorbant, au moins en partie, l'énergie thermique cédée précédemment, on l'évapore en partie, au moins en de la deuxième vapeur d'eau (42), laquelle deuxième vapeur d'eau (42) est accumulée, au moins en partie dans un accumulateur (8, 9) de vapeur.

2. Procédé suivant la revendication 1, dans lequel on envoie la deuxième vapeur d'eau (42) à l'accumulateur (2) de chaleur thermochimique, lors de la décharge (101)de l'accumulateur (2) de chaleur thermochimique.

3. Procédé suivant la revendication 1 ou 2, dans lequel on utilise un accumulateur (9) de vapeur Ruth, comme accumulateur (8, 9) de vapeur.

4. Procédé suivant l'une des revendications précédentes, dans lequel on met l'eau (41) sous une pression d'au moins 0,5 MPa.

5. Procédé suivant l'une des revendications précédentes, dans lequel on chauffe l'eau (41) mise sous pression, avant son retour à l'échangeur de chaleur (4).

6. Procédé suivant l'une des revendications précédentes, dans lequel on apporte de l'eau (43) fraîche à l'eau (41) mise sous pression, avant son retour à l'échangeur de chaleur (4).

7. Procédé suivant la revendication 6, dans lequel on utilise au moins une partie de la deuxième vapeur d'eau (42) pour produire de l'eau (43) fraîche.
